# EUROPEAN PATENT APPLICATION

(11) **EP 1 777 272 A1**
(43) Date of publication of application: **25.04.2007**
(21) Application number: 06017869.6
(22) Date of filing: 28.08.2006
(51) Int. Cl.: C09D 11/00

(54) **Ink jet printable hydrogel for sensor electrode applications**

(30) Priority: 12.09.2005 US 224620
(71) Applicant: E.I. DU PONT DE NEMOURS AND COMPANY, Wilmington, DE 19898 (US)
(72) Inventor: Yang, Haixin, Chapel Hill, NC 27516 (US)
(74) Representative: Towler, Philip Dean

(57) **Abstract**

The present invention provides an ink jet printable hydrogel composition comprising: (a) one or more cross-linkable ionic polymers wherein said polymer is a copolymer, interpolymer or mixture thereof; (b) initiation system; and (c) solvent; wherein said cross-linkable ionic polymers can be selected from photocross-linkable polymers, thermally cross-linkable polymers, photocross-linkable and thermally cross-linkable polymers, and mixtures thereof; and with the proviso that the composition has a viscosity of less than about 100 mPa.s.

## Description

### FIELD OF INVENTION

This invention relates to hydrogel composition(s), their associated ink jet printable application processes, the use of the hydrogel composition in the formation of sensor electrodes, and the sensor electrodes formed from such compositions and processes.

### BACKGROUND OF THE INVENTION

Electrodes for biological and medical applications normally contain hydrogel as part of an electrode. The hydrogels are normally conductive and serve as an interface between a bioassay and an electric probe in biological applications or between the skin and an electronic probe, such as in EKG/EEG, in medical applications. A "hydrogel" is a cross-linked polymer having an equilibrium content between about 10 and 90 percent water. A conductive hydrogel is formed, generally, by blending an ionic species into the hydrogel composition.

Typical prior art hydrogel sensors are formed by casting hydrogel compositions to form hydrogel films. Many of these prior art hydrogels are formed with release liners, which make them unsuitable for screen or ink jet printing methods.

The prior art hydrogel films described above require cutting into desired shapes prior to attachment to an electrode to form a sensor electrode. This method of forming sensor electrodes generates considerable waste of the hydrogel film and also has a multitude of technical and other disadvantages including limited hydrogel film thickness control, imprecise placement of hydrogel film, length of sensor electrode processing time and other processing costs.

Another method of forming a sensor electrode involves screen-printing a hydrogel composition into a desired shape or configuration; followed by UV-curing to form a hydrogel film on an electrode, as described in U.S. Patent Application No. 10/683530 to Yang, et al. (U.S. Patent Publication No. 2005-008018, Attorney Docket No. EL-0517). The screen-printing method overcomes some of the previous prior art problems including waste generated from the cutting of hydrogel films prior to placement on the electrode. However, the composition disclosed in Yang is difficult to deposit into fine and complicated features and onto non-flat substrates, such as round-shaped electrodes.

Ink jet technology is regarded as an additive technology. The prior art technologies used to produce electrode sensors have not utilized ink jet technology. In fact, prior art documentation indicates, as noted above, that methodologies and compositions unsuitable for ink jet printing have been used. One prior art technology used was screen printing, however, screen printing is not digitally controlled and compositions developed for screen printing applications will not work in ink jet printing apparatus.

While ink jet printing has been used in other applications, such as these applications disclosed in International Patent Publication No. WO 2003040242 A2 (20030515) to Tucker et al., entitled "Ink Formulations and Uses for Printing Contact Lenses" which discloses ink that can be applied by ink jet printing processes to contact lenses or to the molds that will be used to make contact lenses, its use in the formation of sensor electrodes by ink jet printing a hydrogel composition onto an electrode, followed UV-curing to form hydrogel on the electrode has not been reported.

Since manufacturers of electrodes for sensor applications require ever finer, more complicated devices, there is a great need to provide electrode sensors and methods of producing such sensors that can achieve these goals. The present inventors have developed such methods and sensors with the ability to generate finer and more complicated features in electrodes and the ability to process onto non-flat surfaces, in part through the use of ink jet technology.

U.S. Patent Application 10/683,539 to Yang et al., disclosed a hydrogel composition with a high viscosity suitable for screen-printing. However, the composition in Yang is not suitable for ink jet printing. An objective of the present invention is to provide an ink jettable conductive hydrogel composition with low viscosity and the processes which allow for the ability to form a desired, fine hydrogel pattern onto electrodes upon photo or thermal cross-linking processing of the hydrogel composition. A further objective of the present invention is to provide a conductive hydrogel composition that already contains ionic species on hydrogelforming polymers. The composition of the present invention does not require the blending-in of ionic species to achieve electronic conductivity, as required in U.S. Patent Application 10/683539 to Yang et al.

The present inventors have shown that ink jet technology can be used in electrode sensor applications to deposit materials to form fine patterns on non-flat substrate. In particular, the present inventors have developed novel compositions and methods of producing electrode sensors which utilize ink jet technology.

### SUMMARY OF THE INVENTION

The present invention provides an ink jettable hydrogel composition comprising: (a) one or more cross-linkable ionic polymers wherein said polymer is a copolymer, interpolymer or mixture thereof; (b) initiation system; and (d) solvent; and with the proviso that the composition has a viscosity of less than 0.1 Pas.s or 100 mPas.s.

The cross-linkable ionic polymers may be selected from photocross-linkable polymers, thermally cross-linkable polymers, photocross-linkable and thermally cross-linkable polymers, and mixtures thereof

The present invention further provides a method of producing a processed hydrogel film or coating layer on an electrode comprising the steps of: (a) providing an ink jettable hydrogel composition; (b) providing a substrate; (c) depositing the ink jettable hydrogel composition from step (a) onto said substrate via ink jet printing techniques; and (d) processing said composition, by photo processing or thermal processing or both photo processing and thermal processing, onto said substrate to form a hydrogel film.

Furthermore, the present invention provides a hydrogel film formed by the method above.

The present invention also provides an electrode utilizing the disclosed hydrogel composition and an electrode utilizing the hydrogel film formed by the method described above.

### DETAILED DESCRIPTION OF THE INVENTION

The hydrogel composition in the present invention comprises one or more cross-linkable polymer(s), wherein said polymer is a copolymer, interpolymer or mixture thereof. The polymer of the present invention comprises a simple acrylic polymer that comprises acrylate or methacrylate units as side chains. It also comprises salts from the reaction of acrylic acid with any base, such as ammonium hydroxide, sodium carbonate or potassium bicarbonate. Therefore, the polymer is photocross-linkable, thermally cross-linkable or both photo and thermally cross-linkable. It is also ionic because of acrylate salt, such as sodium acrylate units, in the polymer.

Before cross-linking, the polymer is water soluble. After cross-linking, the polymer is insoluble or partially soluble in water. However, the polymer can still absorb water and become hydrogel. By careful design of the polymer structure, such as molecular weight, acid number, salt content and the amount of the cross-linkable acrylate unit, the polymer can be made ink jettable. The properties of the subsequently formed hydrogel can be designed and modified to fit different applications.

The hydrogel composition of the present invention simultaneously provides numerous advantages. The first is an ink jet printable or ink jettable composition that allows for fine hydrogel patterns on complicated electrodes. Second, the hydrogel composition uses cross-linkable acrylic polymers that contain sodium or potassium acrylate groups on its backbone. Therefore, the subsequent hydrogel is electronic conductive. There is no need to blend other ionic species into the hydrogel to make it electronically conductive, as required in prior art hydrogel compositions. The third is stability and simplicity of the subsequent hydrogel because there are no blended small molecules. The above advantages together make the hydrogel composition and the subsequent hydrogel film suitable for many sensor applications.

While the present composition comprises (a) one or more cross-linkable ionic polymers wherein said polymer is a copolymer, interpolymer or mixture thereof; (b) initiation system; (c) water; and (d) solvent; a variety of additional ingredients can be incorporated into the hydrogel composition. Depending on the "sensing" ingredients in the hydrogel composition, the subsequent hydrogel on electrodes can have different "sensing" abilities for different applications, for example, glucose sensing.

Ink jet technologies, particularly piezo ink jet technology, normally can only jet a liquid with certain properties, such as viscosity of about 20 m Pas.s at the moment of jetting: Therefore, the hydrogel composition has been formulated to be ink jettable. However, it is noted that the composition of the present invention can be as viscous as 100 m Pas.s. Because of its sheer thinning properties, its viscosity drops significantly under the piezo contraction and becomes ink jettable. In some embodiments, since the ink jetted liquid is of a low viscosity, the resulting hydrogel film or coating layer is often thin. In these embodiments, to obtain a thicker hydrogel film, the particular application may require ink jet printing of the composition multiple times, one layer on top of the previous layer (or multiple prints).

The composition in the present invention can quickly solidify upon photo cross-linking, thermal cross-linking, or both photo and thermal cross-linking the polymer in the composition. Quick solidifying properties allow for the building of multi-layers without significant widening of the ink jetted pattern lines.

Additionally, because of the accuracy that ink jet technology can provide, patterns of resulting hydrogel can be precisely controlled with little or no yield loss. The hydrogel of the present invention does not require the use of additional adhesives to generate sufficient adhesion to surface of common electrode materials. This allows for a superior quality of electrode at a lower production cost.

The main components of the hydrogel composition are discussed herein below.

### I. Organic Polymer

The polymer binder is important to the effectiveness of the composition(s) of this invention. The polymer of the present invention allows the hydrogel to form. For example, the polymer of the present invention may be a viscoelastic polymer. Additionally, the polymers are soluble or partially soluble in water. They become a hydrogel film upon photo cross-linking, thermal cross-linking or both photo and thermal cross-linking of the polymer.

The preferred polymers of the present invention are photocross-linkable polymers. They are made of copolymer, interpolymer or mixtures thereof, wherein each copolymer or interpolymer comprises three comonomer units (designated (1), (2) and (3) and an optional fourth comonomer unit (designated (4). Comonomer (1) is a nonacidic comonomer comprising a C₁₋₁₀ alkyl acrylate, C₁₋₁₀ alkyl methacrylate, styrenes, substituted styrenes or combinations thereof. Comonomer (2) is an acidic comonomer or its salt form or both comprising an ethylenically unsaturated carboxylic acid-containing moiety, wherein 2-25% of the carboxylic acid containing moiety is reacted with a reactive molecule having a first and second functional unit, wherein the first functional unit is a vinyl group and the second functional unit is capable of forming a chemical bond by reaction with the carboxylic acid moiety. Examples of the vinyl group include, but are not limited to, methacrylate and acrylate groups. Examples of the second functional unit include, but are not limited to epoxides, alcohols and amines. The remaining portion of acidic comonomer reacts partially or completely with a base or bases, such as Na₂CO₃ or KHCO₃ to become its salt or salts. Comonomer (3) is this reacted portion of acidic comonomer in the polymer. The fourth comonomer (4) may be added, but is not essential, and is a nonacidic comonomer comprising C1-10 alkyl or alkoxy methacrylate or acrylate. The resultant copolymer, interpolymer or mixture thereof has an acid content of at least from 0 to 10 wt. % of the total polymer weight; a salt content 0 wt% to 20 wt%, a glass transition temperature of 5°C -120°C, preferably 5°C - 60°C, and an weight average molecular weight in the range of 2,000-250,000, preferably 2,000 - 100,000.

The initial presence of acidic comonomer components in the composition is important in this technique. The acidic functional group provides the ability to be partially water soluble, to be able to become salt and be completely soluble. Furthermore, these acid units provide reactive sites for the introduction of UV-crosslinkable units. Appropriate acidic comonomers include ethylenically unsaturated monocarboxylic acids, such as acrylic acid, methacrylic acid, or crotonic acid and ethylenically unsaturated dicarboxylic acids such as fumaric acid, itaconic acid, citraconic acid, vinyl succinic acid, and maleic acid, as well as their hemiesters, and in some cases their anhydrides and their mixtures.

When the nonacidic comonomers (1) and (4) are alkyl acrylates or alkyl methacrylates, as mentioned above, it is preferable that these nonacidic comonomers constitute at least 50 wt. %, preferably 70-75 wt. %, of the polymer binder. When the nonacidic comonomers are not acrylates, it is preferable that these nonacidic comonomers constitute 50 wt. % of the polymer binder and that the other 50 wt. % is an acid anhydride such as the hemiester of maleic anhydride.

The nonacidic portion of the polymer preferably contains nonacidic comonomer that are long chain (C5 and above) alkyl acrylate, alkyl methacrylate, or alkoxyl acylate or alkoxyl methacrylate or urethane acrylate to achieve good adhesion to surface of electrodes after UV-crosslinking. These comonomer units help to lower the T_{g} of the polymer. The use of single copolymers or combinations of copolymers is recognized as long as each of these satisfies the various standards above. In addition to the above copolymers, adding small amounts of other polymer binders is possible. For examples of these, polyolefins such as polyethylene, polypropylene, polybutylene, polyisobutylene, and ethylenepropylene copolymers, polyvinyl alcohol polymers (PVA), polyvinyl pyrrolidone polymers (PVP), vinyl alcohol and vinyl pyrrolidone copolymers, as well as polyethers that are low alkylene oxide polymers such as polyethylene oxide can be cited.

The acidic comonomer also provides the polymer with a reactive site to introduce a reactive molecule such as photocross-linkable functional units. This is accomplished by utilizing 2%-25% of the carboxylic acid-containing moiety reacting with the reactive molecule that contains a vinyl unit, as shown in the schematic below. The final polymer has repeating units, as shown. 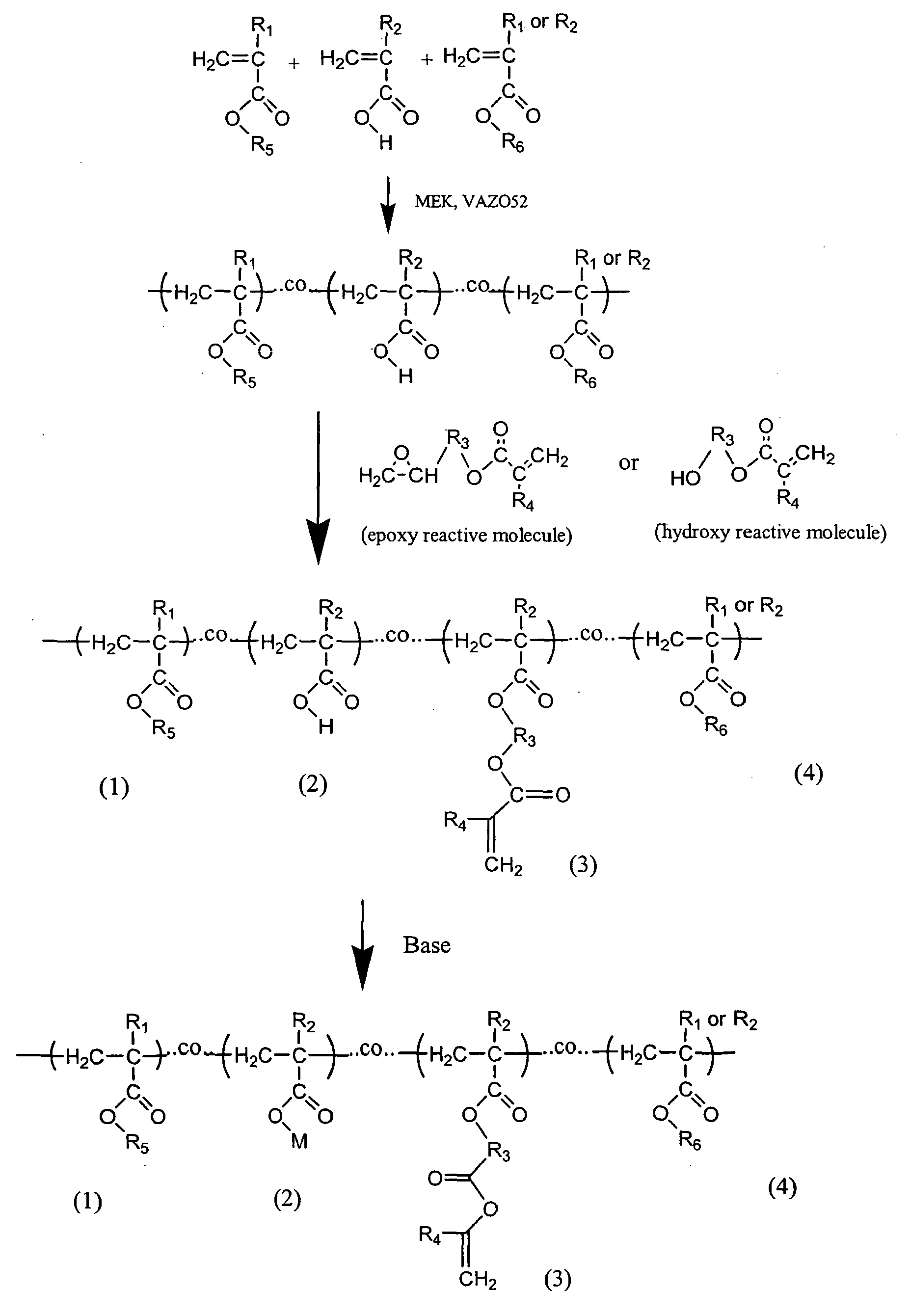 Where:
R₁, R₂ and R₄ are methyl group or hydrogen or a mixture thereof.
R₃ is a straight, branched or ring alkyl group which may contain aromatic groups or other atoms, for example, oxygen; and
R₅ is an alkyl (C₁-C₁₀).
R6 is an alkoxyl (C1 - C10).
M is metal ions, such as K, Na or ammonium ion.

The polymers described herein can be produced by commonly used solution polymerization techniques useful in the art of acrylate polymerization. Typically, such acidic acrylate polymers are produced by mixing alpha- or beta-ethylenically unsaturated acids (acidic comonomers) with one or more copolymerizable vinyl monomer (nonacidic comonomers) in a relatively low-boiling-point (75°C -150°C) organic solvent to obtain a 10%-60% monomer mixture solution, then polymerizing the monomers by adding a polymerization catalyst and heating the mixture under one atmosphere pressure to the reflux temperature of the solvent. After the polymerization reaction is essentially complete, the acidic polymer solution produced is cooled to room temperature.

A reactive molecule, a free radical polymerization inhibitor and a catalyst are added to the cooled polymer solution described above. The solution is stirred until the reaction is complete. Optionally, the solution may be heated to speed up the reaction. After the reaction is complete and the reactive molecules are chemically attached to the polymer backbone, the polymer solution is cooled to room temperature, a proper amount of base dissolved in water or organic solvent or a mixture of both is added to the polymer solution and mixed to generate final ionic acrylate polymer or acrylate polymer with acid form being converted into its salt form. Samples are then collected, and the polymer viscosity, molecular weight, and acid equivalents are measured.

Furthermore, the weight average molecular weight of the polymer is in the range of 2,000-250,000 and any ranges contained therein. The molecular weight of the polymer binder will depend on the application. Weights less than 10,000 are generally preferred for ink jet processes.

Conventional UV-curable methacrylate monomers may be used in the invention. Depending on the application, it is not always necessary to include a monomer in the composition of the invention. Monomer components are present in amounts of 0-20 wt.%, based on the total weight of the dry photopolymerizable layer. Such preferred monomers include t-butyl acrylate and methacrylate, 1,5-pentanediol diacrylate and dimethacrylate, N,N-diethylaminoethyl acrylate and methacrylate, ethylene glycol diacrylate and dimethacrylate, 1,4-butanediol diacrylate and dimethacrylate, diethylene glycol diacrylate and dimethacrylate, hexamethylene glycol diacrylate and dimethacrylate, 1,3-propanediol diacrylate and dimethacrylate, decamethylene glycol diacrylate and dimethyacrylate, 1,4-cyclohexanediol diacrylate and dimethacrylate, 2,2-dimethylolpropane diacrylate and dimethacrylate, glycerol diacrylate and dimethacrylate, tripropylene glycol diacrylate and dimethacrylate, glycerol triacrylate and trimethacrylate, trimethylolpropane triacrylate and trimethacrylate, pentaerythritol triacrylate-and trimethacrylate, polyoxyethylated trimethylolpropane triacrylate and trimethacrylate and similar compounds, as disclosed in U.S. Patent No. 3,380,831, 2,2-di(p-hydroxy-phenyl)-propane diacrylate, pentaerythritol tetraacrylate and tetramethacrylate, 2,2-di-(p-hydroxyphenyl)-propane dimethacrylate, triethylene glycol diacrylate, polyoxyethyl-2,2-di-(p-hydroxyphenyl)propane dimethacrylate, di-(3-methacryloxy-2-hydroxypropyl)ether of bisphenol-A, di-(2-methacryloxyethyl) ether of bisphenol-A, di-(3-acryloxy-2-hydroxypropyl)ether of bisphenol-A, di-(2-acryloxyethyl)ether of bisphenol-A, di-(3-methacrloxy-2-hydroxypropyl)ether of 1,4-butanediol, triethylene glycol dimethacrylate, polyoxypropyltrimethylol propane triacrylate, butylene glycol diacrylate and dimethacrylate, 1,2,4-butanetriol triacrylate and trimethacrylate, 2,2,4-trimethyl-1,3-pentanediol diacrylate and dimethacrylate, 1-phenyl ethylene-1 ,2-dimethacrylate, diallyl fumarate, styrene, 1,4-benzenediol dimethacrylate, 1,4-diisopropenyl benzene, and 1,3,5-triisopropenyl benzene. Also useful are ethylenically unsaturated compounds having a weight average molecular weight of at least 300, e.g., alkylene or a polyalkylene glycol diacrylate prepared from an alkylene glycol of 2 to 15 carbons or a polyalkylene ether glycol of 1 to 10 ether linkages, and those disclosed in U.S. Patent No. 2,927,022, e.g., those having a plurality of free radical polymerizable ethylenic linkages particularly when present as terminal linkages. In several embodiments, the monomers which are used are-polyoxyethylated trimethylolpropane triacrylate, ethylated pentaerythritol triacrylate, dipentaerythritol monohydroxypentaacrylate and 1,10-decanediol dimethlacrylate.

The total weight % of polymer, monomer and mixtures thereof in the composition is in the range of about 0.5 wt. % - 10 wt. % based on total composition and any ranges contained therein.

### II. Initiation System

Initiation systems, which are suitable for use with the present invention, include thermal initiation, redox initiation, photoinitiation, initiation by ionizing radiation, electroinitiation, and plasma initiation. The preferred initiation system is photoinitiation.

Suitable photoinitiation systems are those, which generate free radicals upon exposure to actinic light at ambient temperature. These include the substituted or unsubstituted polynuclear quinones which are compounds having two intracyclic carbon atoms in a conjugated carbocyclic ring system, e.g., 2-benzyl-2- (dimethylamino)-1-(4-morpholinophenyl)-1-butanone, 2,2-dimethoxy-2-phenylacetophenone, 9,10-anthraquinone, 2-methylanthraquinone, 2-ethylanthraquinone, 2-tert-butylanthraquinone, octamethylanthraquinone, 1,4-naphthoquinone, 9,10-phenanthrenequinone, benz (a) anthracene-7, 12-dione, 2,3-naphthacene-5,12-dione, 2-methyl-1,4-naphthoquinone, 1,4-dimethylanthraquinone, 2,3-dimethylanthraquinone, 2-phenylanthraquinone, 2,3-diphenylanthraquinone, retenequinone,
7,8,9,10-tetrahydronaphthracene-5,12-dione, and 1,2,3,4-tetra-hydrobenz(a)anthracene-7,12-dione. Other photoinitiators which are also useful, even though some may be thermally active at temperatures as low as 85°C, are described in U.S. Patent No. 2,760,863 and include vicinal ketaldonyl alcohols such as benzoin, pivaloin, acyloin ethers, e.g., benzoin methyl and ethyl ethers; alpha-hydrocarbon-substituted aromatic acyloins, including alpha-methylbenzoin, alpha-allylbenzoin and alpha-phenylbenzoin, thioxanthone and/or thioxanthone derivatives and the appropriate hydrogen donors. Photoreducible dyes and reducing agents, disclosed in U.S. Patent Nos. 2,850,445, 2,875,047, 3,097,096, 3,074,974, 3,097,097, and 3,145,104, as well as dyes of the phenazine, oxazine, and quinone classes, Michler's ketone, benzophenone,
2,4,5-triphenylimidazolyl dimers with hydrogen donors including leuco dyes and mixtures thereof, as described in U.S. Patent Nos. 3,427,161, 3,479,185, and 3,549,367, can be used as initiators. Also useful with photoinitiators and photoinhibitors are sensitizers disclosed in U.S. Patent No. 4,162,162. The photoinitiator or photoinitiator system is present in 0.05% to 10% by weight based on the total weight of a dry photopolymerizable layer.

### III. Solvent

The solvent component of the hydrogel composition, which may be water, or a mixture of water and organic solvent(s), is chosen so as to obtain complete solution therein of the polymer and other organic components. The solvent of the present invention is required in an amount necessary to obtain complete solution of the polymer and other organic components. The solvent should be inert (non-reactive) towards the other constituents of the composition. Common relatively low boiling point solvents, with boiling point temperature less than about 150°C, are preferred as the bulky solvent along with a 1%-5% high boiling temperature solvent, such as ethylene glycol that is needed to prevent composition drying out at the tip of ink jet nozzles.

### IV. Optional Additional Additives of Hydrogel Composition

Additional additives such as, ionic components, biocides, preservatives, humectants, surfactants, and adhesion promoters, can be included in the hydrogel composition to achieve desired properties, even though not necessary. A brief description of some possible additives is provided below.

"Ionic component", as used herein, refers to an atom, radical, or molecule that is capable of being electrically charged, either negatively (anionic) or positively (cationic) or both (amphoteric), or to a material whose atoms already exist in a charged state. The ionic components of the present invention are added to reduce the transverse electrical resistance. For example, the ionic components of the present invention may include salts (anionic, cationic, or anions of organic acids), buffers, and/or ionic polymers or polyelectrolytes.

"Biocide" as used herein, refers to an agent, incorporated or applied, that may destroy or deter biological material, including but not limited to bacteria, fungi, mold, and marine organisms. Biocides may be used in the present invention to destroy or deter biological material growth which may be promoted due to the aqueous environment. For example, biocides including, but not limited to high-energy radiation, Germ-all® (ISP Technologies, Inc.), and Irgasan® (Ciba Specialty Chemicals), may be used in the present invention.

"Preservative" as used herein, refers to a chemical, incorporated or applied, to prevent deterioration by means including, but not limited to living organisms, heat, oxidation, and weather.

"Humectant" as used herein, is any substance that promotes retention of moisture. For example, sorbitol, propylene glycol, glycerol, polyethylene glycol, poly(propylene oxide), or combinations thereof may be used in the present invention, among other humectants known to those skilled in the art. Preferably, the humectant used in the present invention is biocompatible.

"Surfactant" as used herein, is any substance that modifies the surface tension. For example, the following surfactants, as well as others known to those skilled in the art, may be used in the present invention: Pluronic® P85 (BASF), Pluronic® P84 (BASF), Tween® 80 (Aldrich), Sodium Dodecyl Sulfate (Aldrich), Amphosol® CG, Amphosol® HCG, Ninol® LL (Stepan Corporation), Glycerol (Aldrich), sodium laureth sulfate, and poly ethylene glycol esters.

"Adhesion promoter" as used herein, is a material that may be added to the hydrogel composition to improve adhesion of the processed hydrogel film to the desired substrate.

### V. Production of Processed Hydrogel Film and Electrode

The hydrogel compositions as described herein may be utilized to create a processed hydrogel film or coating layer on electrodes. Once the hydrogel composition is prepared to form a composition having suitable consistency and rheology for ink jet printing, the composition is then printed on surface of electrodes in the conventional manner as known to those in the art of ink jet printing techniques.

The hydrogel film of the present invention may be formed by the method comprising the steps of: (1) providing the hydrogel composition as described herein above; (2) providing a substrate, i.e. surface of electrodes; (3) depositing the composition in (1) onto the substrate via ink jet printing techniques; and (4) processing said composition on said substrate to form a hydrogel film. The processing is by photo or thermal initiation, typically UV-irradiation or heating, of the deposited composition to make the film.

Thus, the hydrogel film is formed directly onto the electrode in the precise location and dimensions desirable. This electrode may then be used in different applications.

Because the hydrogel film(s) of the present invention will eventually lose solvent under ambient conditions, they are preferably stored in a water and gas impermeable container.

### Examples

The invention will now be described in further detail by reference to the following, non-limiting examples.

### Example 1: Production of Photocrosslinkable Polymer

### Procedure:

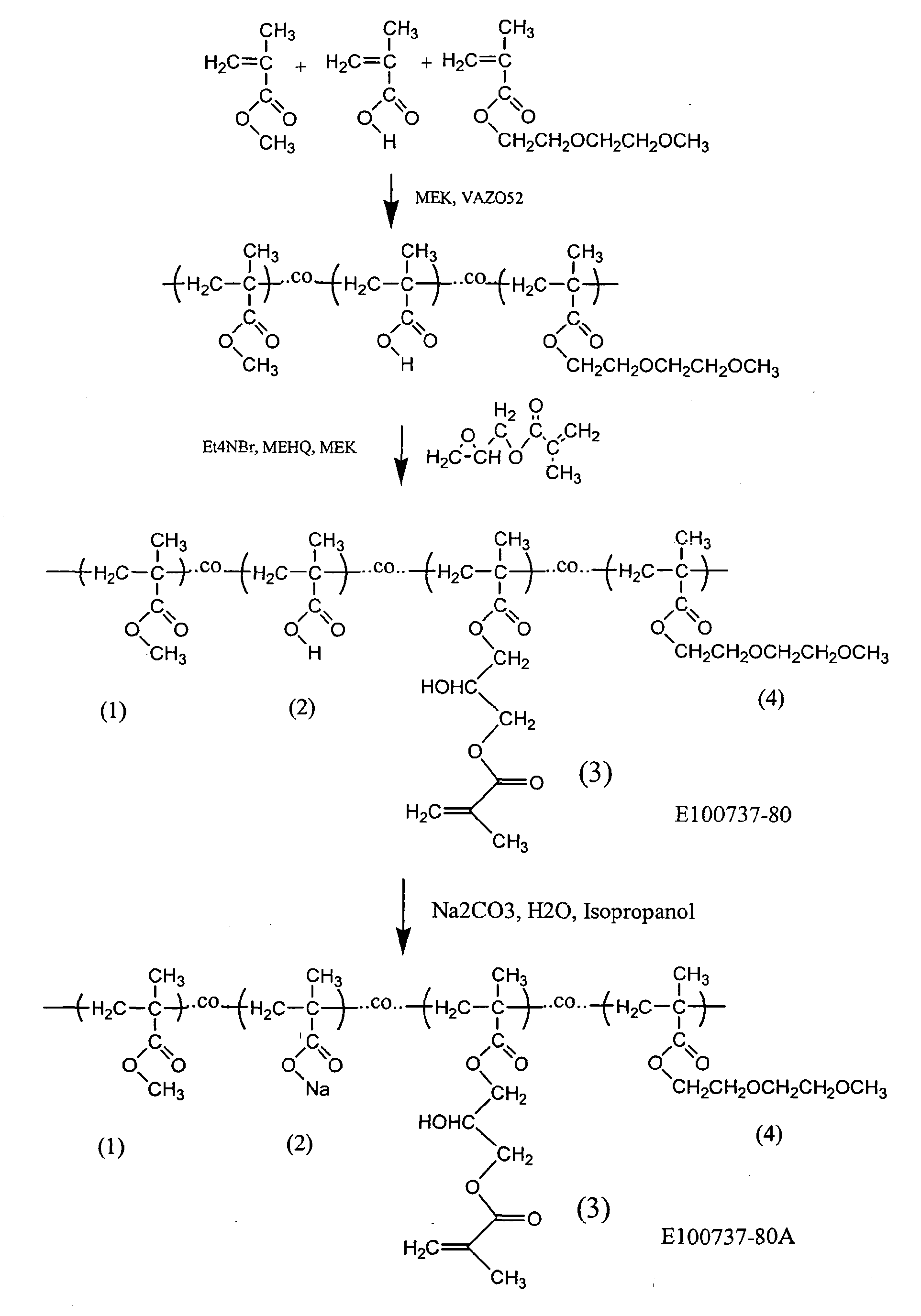

Into a 1 L flask equipped with a nitrogen gas inlet and mechanical stirrer, 200 grams of methylethylketone (MEK) was added and heated under nitrogen gas to reflux;
1) A mixture of 35 grams di(ethylene glycol) methyl ether methacrylate, 40 grams of methyl methacrylate, 25 grams of methacrylic acid and 150 grams MEK was continuously added into the above 1 L flask at a constant speed over a period of 120 minutes, using pump#1;
2) A mixture of 6 grams VAZO52 and 26 grams MEK was continuously added into the above 1 L flask over a period of 140 minutes, using pump#2. The two pumps started at the same time. During the addition, the reaction mixture was stirred at reflux temperature under nitrogen gas.
3) Continued to stir at reflux temperature for 120 minutes after the addition;
4) Cooled the above reaction mixture to 60°C, 200 grams MEK was added. The temperature was kept at 55°C, and 1 gram 4-methoxyhydroquinone (MEHQ) was added;
5) Then, 1 gram tetraethylammonium bromide was added, followed by addition of 13.75 grams glycidyl methacrylate;
6) The mixture was stirred at 58°C for 24 hours to generate E100737-80;
7) 100 g solution of 24.3 g NaCO3 dissolved in a mixture of 1:1 water isopropanol was added to the above polymer solution at 25°C and stirred for 30 minutes to generate E100737-80A. The resultant polymer solution can be directly used or further dried;
8) The solvents were removed by evaporation and the mixture was dried at 60°C under high vacuum for 12 hours;
9) All materials were used as received from Aldrich except for VAZO52, available from E. I. du Pont de Nemours and Company.

### Example 2

### Hydrogel Composition #1

| | | |
|---|---|---|
| 1. | E100737-80A | 2% |
| 2. | H₂O | 83% |
| 3. | Isopropanol from Aldrich Chemicals | 12% |
| 4. | Ethylene glycol from Aldrich Chemicals | 2% |
| 5. | Irgacure 369 from Ciba Specialty Chemicals | 1% |

The above materials were stirred at 50°C to dissolve all solids to give a clear solution. The solution viscosity was 82mPas.s as measured by a Brookfield Programmable DV-II + Viscometer at 25°C. The resultant solution was filtered through a 2-micron filter and printed on top-of an electrode by a Microfab Ink Jet printer (AutoDrop AD-P-701 with dispenser head MD-K-130/140H, using a 70-micron orifice nozzle. The electrode was made of a printed and fired silver thick film paste. The printed-or deposited hydrogel composition #1 was exposed to UV-radiation using a Hg-vapor lamp until sufficiently cured. This processing resulted in a firm and well attached hydrogel film on the silver electrode.

### Example 3

### Hydrogel Composition #2

| | | |
|---|---|---|
| 1. | Trimehtylolpropane triacrylate (TMPTA) from Sartomer Corporation | 1.0% |
| 2. | E100737-80A | 6.5% |
| 2. | H₂O | 60% |
| 3. | Isopropanol from Aldrich Chemicals | 30% |
| 4. | Ethylene glycol from Aldrich Chemicals | 2% |
| 5. | Irgacure 369 from Ciba Specialty Chemicals | 0.5% |

The above materials were stirred at 50°C to dissolve all solids to give a clear solution. The solution viscosity was 95 mPas.s as measured by a Brookfield Programmable DV-II + Viscometer at 25°C. The resultant solution was filtered through a 2-micron filter and printed on top of an electrode by a Microfab Ink Jet printer, using a 70-micron orifice nozzle. The electrode was made of a printed and fired silver thick film paste. The printed or deposited hydrogel composition #1 was exposed to UV-radiation using a Hg-vapor lamp until sufficiently cured. This processing resulted in a firm and well attached hydrogel film on the silver electrode.

### Example 4

### Hydrogel Composition #3

| | | |
|---|---|---|
| 1. | Polyvinylpyrrolidone (K-90), from ISP Technologies, | 3% |
| 2. | E100737-80A | 3% |
| 3. | H₂O | 80% |
| 4. | Isopropanol from Aldrich Chemicals | 11% |
| 5. | Ethylene glycol from Aldrich Chemicals | 2% |
| 6. | Irgacure 369 from Ciba Specialty-Chemicals | 1% |

The above materials were stirred at 50°C to dissolve all solids to give a clear solution. The solution viscosity was 42 mPas.s as measured by a Brookfield Programmable DV-II + Viscometer at 25°C. The resultant solution was filtered through a 2-micron filter and printed on top of an electrode by a Microfab Ink Jet printer, using a 70-micron orifice nozzle. The electrode was made of a printed and fired silver thick film paste. The printed or deposited hydrogel composition #1 was exposed to UV-radiation using a Hg-vapor lamp until sufficiently cured. This processing resulted in a firm and well attached hydrogel film on the silver electrode.

## Claims

1. An ink jet printable hydrogel composition comprising:
(a) one or more cross-linkable ionic polymers wherein said polymer is a copolymer, interpolymer or mixture thereof;
(b) initiation system; and
(c) solvent;
and with the proviso that the composition has a viscosity of less than about 100 mPa.s.

2. The composition of claim 1 wherein said cross-linkable ionic polymers are selected from photocross-linkable polymers, thermally cross-linkable polymers, photocross-linkable and thermally cross-linkable polymers, and mixtures thereof.

3. The composition of claim 1 wherein said polymer is a photocross-linkable polymer wherein each copolymer or interpolymer or mixture comprises:
(1) a nonacidic comonomer comprising a C₁₋₁₀ alkyl acrylate, C₁₋₁₀ alkyl methacrylate, styrenes, substituted styrenes or combinations thereof;
(2) an acidic comonomer and its salts comprising ethylenically unsaturated carboxylic acid containing moiety, wherein 2-25% of the carboxylic acid containing moiety is reacted with a reactive molecule having a first and second functional unit, wherein the first functional unit is a vinyl group and the second functional unit is capable of forming a chemical bond by reaction with the carboxylic acid moiety; and
(3) third comonomer units formed from the reacted portion of acidic comonomers.

4. The composition of claim 3 wherein said polymer further comprises a nonacidic comonomer comprising C1-10 alkyl or alkoxy methacrylate or acrylate.

5. The composition of claim 3 wherein the vinyl group is selected from a methacrylate, acrylate group or mixtures thereof.

6. The composition of claim 3 wherein the second functional unit is selected from an epoxide, alcohol, amine or mixtures thereof.

7. The composition of any one of claims 1-6 further comprising a monomer.

8. The composition of claim 7 wherein said monomer is selected from the group comprising polyoxyethylated trimethylolpropane triacrylate, ethylated pentaerythritol triacrylate, dipentaerythritol monohydroxypentaacrylate, 1,10-decanediol dimethlacrylate and mixtures thereof.

9. The composition of claim 1 in which the solvent is selected from the group comprising water, ethanol, methyl ethyl ketone, acetone, and mixtures thereof.

10. The composition of claim 1 further comprising an additive selected from the group comprising humectants, surfactants, biocides, preservatives and combinations thereof.

11. The composition of claim 1 which is in the form of an ink suitable for ink jet printing.

12. A method of producing a processed hydrogel film comprising:
(a) providing an ink jet printable hydrogel composition;
(b) providing a substrate or electrode;
(c) depositing the composition in (a) onto said substrate via ink jet printing techniques; and
(d) processing said composition on said substrate to form a hydrogel film or coating layer.

13. A method of producing a processed hydrogel film:
(a) providing the composition of claim 1;
(b) providing a substrate;
(c) depositing the composition in (a) onto said substrate via ink jet printing techniques; and
(d) processing said composition on said substrate to form a hydrogel film or coating layer.

14. A hydrogel film formed by the method of any one of claims 12 or 13.

15. A sensor electrode comprising the hydrogel film of claim 13.

16. A method of forming a sensor electrode comprising:
(a) providing the composition of claim 1;
(b) providing an electrode substrate;
(c) depositing the composition in (a) onto said substrate via ink jet printing techniques; and
(d) processing said composition on said substrate to form a hydrogel film or coating layer.

17. A sensor electrode formed by the method of claim 16.
